# EUROPÄISCHE PATENTSCHRIFT

(11) **EP 1 945 348 B1**
(45) Veröffentlichungstag und Bekanntmachung des Hinweises auf die Patenterteilung: **27.07.2011**
(21) Anmeldenummer: 06818430.8
(22) Anmeldetag: 07.11.2006
(51) Int. Cl.: B01J 19/24, B01J 19/00, B01J 19/26, B01F 5/04, C05B 11/06

(54) **VERFAHREN ZUR HERSTELLUNG VON SCHWEFELHALTIGEM STICKSTOFFDÜNGER**
PROCESS FOR PRODUCING SULPHUROUS NITROGEN FERTILIZER
PROCEDE DE FABRICATION D'ENGRAIS AZOTES ADDITIONNES DE SOUFRE

(30) Priorität: 08.11.2005 DE 102005053892
(43) Veröffentlichungstag der Anmeldung: 23.07.2008
(73) Patentinhaber: Borealis Agrolinz Melamine GmbH, 4021 Linz (AT)
(72) Erfinder: BRUCKBAUER, Christina, A-5282 Ranshofen (AT); JAEGER, Emmerich, A-4532 Rohr Im Kremstal (AT)
(74) Vertreter: Gross, Felix
(86) Internationale Anmeldenummer: PCT/EP2006/010729
(87) Internationale Veröffentlichungsnummer: WO 2007/054293

(56) Entgegenhaltungen:
- EP-A2- 0 039 241
- FR-A- 2 573 065
- FR-A1- 2 141 490
- US-A- 3 502 441
- US-A- 3 669 641

## Beschreibung

Die Erfindung betrifft für ein Verfahren zur Herstellung von schwefelhaltigem Stickstoffdünger nach Anspruch 1.

Rohphosphate basieren mit etwa 75% - 80% Gewichtsanteil auf dem Mineral Apatit, das Pflanzen wegen der weitgehenden Wasserunlöslichkeit dieses Materials nicht als Phosphatquelle nutzen können. Um Rohphosphate in eine für Pflanzen verfügbare Form umzuwandeln, ist es erforderlich, dem Mineral Apatit einen Teil des enthaltenen Calciums zu entziehen. Dafür wird unter anderem das Nitrophosphatverfahren, auch ODDA-Verfahren genannt, eingesetzt.

Beim Nitrophosphatverfahren wird, nach Aufschluss des Rohphosphates mit Salpetersäure in der ODDA-Anlage, durch Abkühlen des Reaktionsgemischs Calciumnitrat-Tetrahydrat ausgefällt und durch Filtration abgetrennt:

Ca₅(PO₄)₃F + 10 HNO₃ + n H₂O→ 5Ca(NO₃)₂.4H2O↓+ 3 H₃PO₄ + HF (1)

In den letzten Jahren ist gebietsweise, wegen der Verminderung der Schwefelemissionen infolge vermehrter Rauchgasentschwefelung und Reduktion des Schwefelgehaltes in Treibstoffen, eine Verarmung an Schwefel in landwirtschaftlich genutzten Böden festzustellen. Der Schwefelentzug durch Pflanzen muss durch Schwefelgaben über Düngemittel ergänzt werden. Die Nachfrage nach schwefelhaltigen Düngern, insbesondere nach Stickstoffeinzeldüngern mit Schwefel, ist steigend.

Eine der möglichen schwefelhaltigen Komponenten zur Produktion schwefelhaltiger Dünger ist Gips. Es ist bekannt, Rohphosphat anstelle von Salpetersäure mit Schwefelsäure aufzuschließen und den ausgefällten Gips und das Filtrat zu den gewünschten Produkten aufzuarbeiten. Dieses Verfahren ist als Nasssäureverfahren bekannt (US 3 653 872 oder GB 1 247 365).

Es sind auch Verfahren bekannt, welche den Fällungsgips zur Produktion von schwefelhaltigen Komplexdüngem einsetzen. Dies ist beispielsweise in RU 2186751 und Winnacker Küchler "Chemische Technologie", Band 2, 4. Auflage, 1982; Seite 356 - Seite 360 beschrieben.

Den genannten Verfahren ist gemein, dass durch Zugabe der Schwefelsäure beim Rohphosphataufschluss der so genannte Fällungsgips entsteht, welcher anschließend weiterverarbeitet wird. Dabei ist nachteilig, dass der feinkristalline Fällungsgips vor der weiteren Verarbeitung abfiltriert werden muss, was technisch äußerst schwierig ist. Des Weiteren entstehen bei der Gipsfällung Gipshalbhydrat oder Gipsdihydrat, welche hochviskose Pasten bilden und deshalb nicht mit anderen Bestandteilen zu Dünger anmaischbar und granulierbar sind. Darüber hinaus enthält der Fällungsgips einen Teil der Schwermetallverunreinigungen des Rohphosphates. Dadurch ist sein Einsatzgebiet sehr eingeschränkt; zumeist muss der Fällungsgips deponiert werden, was in zunehmendem Maße mit hohen Kosten verbunden ist.

Aus der WO 2006/050936 ist ein Verfahren zur Herstellung von schwefelhaltigem Stickstoffdünger bekannt, bei dem Calciumnitrat in einer Mischapparatur mit einer schwefelhaltigen Verbindung, bevorzugt Schwefelsäure H₂SO₄, umgesetzt wird und durch Granulierung der entstehenden gipshältigen Suspension der Dünger erhalten wird. Die Umsetzung erfolgt hier in einem Rührkesselreaktor einer Ammonisierungsapparatur in Gegenwart von Ammoniak NH₃.

Dabei werden die Reaktanden in den Rührkesselreaktor gleichzeitig eingeführt. Die parallele Zugabe der Reaktanden kann zu einer lokalen Überhitzung führen, da gasförmiges NH₃ nicht ausreichend dispergierbar ist. Längere Verweilzeiten im sauren Milieu und lokale Überhitzungen können im schlimmsten Fall zu Explosionen führen. Aufgrund der relativ langen Verweildauer der Reaktanden im Reaktor kommt es zur Bildung einer hochviskosen Masse, die Verlegungen hervorrufen kann.

Neben Rührkesselreaktoren sind Rohrreaktoren auf dem Gebiet der Düngerherstellung bekannt. So ist z.B. die Herstellung von Ammoniumnitrat, Stickstoff-Phosphor-Kali-Dünger oder Ammoniumsulfat im Rohrreaktor beschrieben.

Die EP 0272974 beschreibt z.B. einen Rohrreaktor zur Neutralisation des Produktes eines Phosphataufschlusses durch Einleiten von NH₃, wobei es zur Bildung von Ammoniumphosphat oder -polyphosphat kommt. Dabei wird das NH₃ und Wasser, sowie Schwefelsäure und Phosphoroxid separat in den Rohrreaktor eingeführt und zur Reaktion gebracht.

Auch aus der FR2695840 ist ein Rohrreaktor zur Neutralisation von Schwefelsäure oder Phosphorsäure durch Einleiten von NH₃ bekannt. In der Einleitzone ist dabei ein Mischer angeordnet.

Bei der Herstellung von schwefelhaltigem Stickstoffdünger in Form einer gipshaltigen Suspension würde gemäß den bisher üblichen Verfahren zunächst Schwefelsäure H₂SO₄ mit Ammoniak NH₃ gemischt und das gebildete Ammoniumsulfat mit Calciumnitrat umgesetzt. Problematisch bei einer solchen Reaktionsführung ist jedoch der stark exotherme Reaktionsverlauf der Reaktion von Schwefelsäure und Ammoniak, wodurch eine Kühlung mit Kühlwasser direkt im Reaktor notwendig wird.

Da es jedoch aufgrund besserer Lagerstabilität und Verarbeitbarkeit wünschenswert ist, eine wasserarme Düngerformulierung herzustellen, ist eine Kühlung der Reaktormischung mittels Wasser nicht vorteilhaft. Zur Herstellung von wasserarmem Dünger sollte der Wassergehalt im Reaktor einen Gehalt von 5 bis 15 % nicht übersteigen.

Der Erfindung liegt nunmehr das Problem zugrunde, ein Verfahren zur Herstellung von schwefelarmen Stickstoffdünger zu entwickeln, bei dem ein starke Wärmeentwicklung und lokale Überhitzung und die damit verbundene Explosionsgefahr reduziert bzw. verhindert wird, ohne dass eine direkte Kühlung des Reaktionsmediums mit Wasser erforderlich ist.

Diese Aufgabe wird durch die Verwendung eines Rohrreaktors wie nachfolgend beschrieben gelöst.

Der verwendete Rohrreaktor weist mindestens eine Einleitzone und mindestens eine Mischstrecke auf, wobei in der Einleitzone mindestens ein erstes Mittel zum Einbringen eine ersten Reaktanden und mindestens ein zweites Mittel zum Einbringen eines zweiten Reaktanden angeordnet sind. Der erfindungsgemäße Rohrreaktor ist durch mindestens ein weiteres drittes Mittel zum Einbringen von mindestens einem weiteren dritten Reaktanden auf, wobei das dritte Mittel in der mindestens einen Einleitzone, in und / oder nach der mindestens einen Mischstrecke angeordnet ist.

Es ist dabei von Vorteil, dass der Rohrreaktor mehrere Mittel zum Einbringen des dritten Reaktanden aufweist, wobei eines dieser Mittel in der mindestens einen Einleitzone und ein weiteres dieser Mittel nach der mindestens einen Mischstrecke angeordnet ist.

Mit Vorteil ist der Rohrreaktor modular aufgebaut und weist neben der Mischstrecke mindestens eine Einleitzone und mindestens ein Auslaufzone auf, wobei die Mischstrecke zwischen Einleitzone und Auslaufzone angeordnet ist.

Mit Vorteil weist der Rohrreaktor mindestens zwei Mischstrecken auf, wobei das mindestens eine dritte Mittel zum Einbringen des dritten Reaktanden in den Rohrreaktor zwischen den mindestens zwei Mischstrecken angeordnet ist.

Das mindestens eine dritte Mittel zum Einbringen des dritten Reaktanden nach der Mischstrecke ist bevorzugt als gebogenes Einleitrohr ausgebildet ist, wobei die Austrittsöffnung des Einleitrohres in der Mitte des Rohrreaktorquerschnitts angeordnet ist. Durch diese Anordnung wird der mindestens eine Reaktand, wie z.B. Schwefelsäure, direkt in eine mit Ammoniak versetzte Calciumnitrat-Lösung eingeleitet. Dadurch wird eine Reaktion mit dem sich insbesondere im oberen Teil des Reaktors angesammelten gasförmigen Ammoniak verhindert.

Mit Vorteil dient das mindestens eine dritte Mittel zum Einbringen eines dritten Reaktanden in den Rohrreaktor dem Einbringen von Ammoniak.

Es ist auch von Vorteil, wenn das mindestens eine dritte Mittel zum Einbringen eines dritten Reaktanden in den Rohrreaktor dem Einbringen Schwefelsäure, dient.

Es ist auch möglich, dass das dritte Mittel zum Einbringen von Schwefelsaure in der Einleitzone des Rohrreaktors mindestens zweiteilig ausgebildet ist, wobei die Teile radial um den Rohrreaktor angeordnet sind.

Das mindestens erste Mittel dient in der Einleitzone dem Einbringen einer Calciumnitrat-Lösung beispielsweise in Form von geschmolzenen Ca(NO₃)₂*4H₂O, und das mindestens zweite Mittel in der Einleitzone dem Einbringen von NH₃.

Der Rohrreaktor ermöglicht somit eine getrennte Zugabe der Reaktanden. Insbesondere die Möglichkeit einer stufenweisen Zugabe von Ammoniak als zweiten Reaktanden verhindert eine zu starke exotherme Reaktion, so dass lokale Überhitzungen vermieden werden.

Des Weiteren ermöglicht der Rohrreaktor kurze Verweilzeiten der Reaktanden und eine gute Durchmischung über den gesamten Apparatequerschnitt. Auch wird eine hohe Strömungsgeschwindigkeit erreicht, so dass die Reaktionszeit insgesamt kurz ist.

Ein Vorteil des Rohrreaktors gegenüber dem Einsatz von Rührkesseln besteht darin, dass der Rohrreaktor keine zusätzlichen Pumpen zum Fördern des Reaktionsgemisches benötigt. Im Rohrreaktor werden die Reaktanden deshalb mit einem bestimmten Vordruck durch das Rohr befördert, wohingegen in einem Rührkessel eine Pumpe zum Transport des schwefelhaltigen Düngers nötig ist.

Der Rohrreaktor weist in der Einleitzone mindestens einen Mischkopf, insbesondere ein Kaskadenmischkopf, auf, wobei im Mischkopf bevorzugt mindestens ein Statikmischer, insbesondere ein Intensivmischer, angeordnet ist.

Für die Dispersion von Ammoniak in Calciumnitrat-Lösung in der Einleitzone ist es von Vorteil, anstelle von Wendelmischerelementen einen Intensivmischer zu verwenden, wodurch die Gesamtlänge des Rohrreaktors verkürzt wird.

Es ist von Vorteil, wenn das erste Mittel zum Einbringen des ersten Reaktanden als ein Einleitrohr mit einem Durchmesser bis zu 40 mm, und das zweite Mittel zum Einbringen des zweiten Reaktanden als ein Einleitrohr, insbesondere ein gebogenes Einleitrohr, mit einem Durchmesser bis zu 150 mm ausgebildet ist.

Es ist insbesondere vorteilhaft, wenn das erste und das zweite Mittel zum Einbringen des ersten und zweiten Reaktanden in einem Winkel zwischen 0 bis 90°, bevorzugt 90°, zur Achse des Rohrreaktors angeordnet sind. Es ist auch von Vorteil, wenn das erste und zweite Mittel in einem Winkel zwischen 0 bis 180°, bevorzugt 90°, zueinander angeordnet sind.

Es ist auch von Vorteil, wenn in mindestens einer Mischstrecke mindestens ein Statikmischerelement angeordnet ist. Das Statikmischerelement in der mindestens einen Mischstrecke des Rohrreaktors ist bevorzugt als Mischerelement mit einem Mittel zur Änderung der Drehrichtung, insbesondere als Wendelmischer, als Mittel zur Verwirbelung, insbesondere Intensivmischer, und/oder als statischer Mischer, ausgebildet.

Es ist insbesondere von Vorteil, wenn die Mischstrecke mit mehreren Mischelementen, insbesondere Wendelmischerelementen ausgestattet ist. Die Mischelemente sind dabei mit Vorteil in mindestens einer der zwei Teilmischstrecken der Mischstrecke angeordnet, wobei eine Anordnung nach dem Mittel zum Einbringen der Schewefelsäure bevorzugt ist.

In der Mischstrecke sind bevorzugterweise zwei oder mehr Wendelmischerelemente mit entgegengesetzter Drehrichtung angeordnet, um eine optimale Durchmischung der Reaktanden zu erreichen. Die Wendelmischerelemente sind so gefertigt, dass sie bei Bedarf leicht aus dem Rohrreaktor entnommen und ersetzt werden können. Zudem haben die Wendelmischerelemente den Vorteil, dass sie kostengünstig und schnell gefertigt werden können.

Die Mischstrecke weist vorteilhafterweise einen Durchmesser bis zu 300 mm, insbesondere zwischen 50 und 250 mm, und eine Gesamtlänge bis zu 5500 mm, insbesondere bis zu 4000 mm, auf. Diese Abmaße gewährleisten bei entsprechend hohem Durchsatz eine turbulente Strömung im Rohrreaktor. Die Reynolds-Zahl weist idealerweise einen Wert zwischen 2000 und 2500 auf.

Ein Durchmesser über 300 mm ist aus sicherheitstechnischen Gründen nicht zu empfehlen. Eine Gesamtlänge über 5500 mm ist ebenfalls nicht zu empfehlen, da dies zu einem unnötigen Druckverlust im Rohrreaktor führt und die Gefahr von Verlegungen durch das Reaktionsprodukt besteht.

Bevorzugt ragt die Auslaufzone des Rohrreaktors in eine Granuliertrommel. Die Auslaufzone weist vorteilhafterweise mindestens eine Düse und/oder mindestens eine Verengung und/oder .mindestens eine konische Verjüngung auf. Auf diese Weise werden Druckschwankungen im Reaktor vermindert. Außerdem wird die Freisetzung von Wasserdampf im Rohrreaktor vermieden und durch die Verjüngung eine gute Zerstäubung des Produktes erreicht.

In einer bevorzugten Ausführungsform des Reaktors erfolgt der Übergang in die Granuliertrommel über eine Zweistoffdüse. In diesem Fall wird die Verjüngung am Übergang in die Granuliertrommel aus zwei konzentrischen Rohren gebildet, wobei das Innenrohr in direkter Fortsetzung des Reaktors formschlüssig mit diesem verbunden ist und das äußere Rohr über eine Ringleitung mit Anschlussstutzen für Druckluft am Innenrohr längsverstellbar das Innenrohr in der Länge überragend angeordnet ist durch einen steileren Verjüngungswinkel zum Innenrohr eine variable Verteilung von Druckluft am Mundstück des Innenrohres zulässt, um das Produkt beim dadurch erfolgenden Dispergieren über die so ausgebildete Zweistoffdüse in unterschiedlicher Feinheit in die Granuliertrommel einbringen zu können.

Es ist vorteilhaft, wenn der Rohrreaktor kontinuierlich betrieben wird und vor einer Granulationseinheit angeordnet ist. Besonders vorteilhaft ist eine Anordnung, welche die Abtrennung des entstehenden Wasserdampfes vom Reaktionsprodukt erlaubt. So kann der Rohrreaktor beispielsweise am hinteren Ende einer im Gleichstrom betriebenen Granuliertrommel angeordnet sein. Diese Anordnung erlaubt, dass der am Reaktorauslauf frei werdende Wasserdampf sofort mit der Abluft aus der Granuliertrommel abgesaugt wird und ein längerer Produktkontakt vermieden wird. Ebenso vorteilhaft ist es, wenn der Rohrreaktor in eine Granuliereinheit in Form einer Doppelpaddelschnecke ragt. Ein Abzug des frei werdenden Wasserdampfes in der Doppelpaddelschnecke ist möglich und der Wasserdampf stört nicht in der anschließenden Granulations- bzw. Trockeneinheit.

Der Rohrreaktor weist ebenfalls mit Vorteil ein Mittel zur Entnahme von Proben, insbesondere in Form eines T-Stückes auf, und/oder ein weiteres Mittel zum Einleiten von Luft auf, die in der Auslaufzone angeordnet sind.

Auch ist vorteilhafterweise in der Mischstrecke und/oder in der Auslaufzone mindestens ein Mittel zur Temperaturbestimmung angeordnet.

Die Aufgabe der vorliegenden Erfindung wird durch ein Verfahren zur Herstellung von schwefelarmen Stickstoffdünger gemäß Anspruch 1 und durch die Verwendung des beschriebenen Rohreaktors in einem solchen Verfahren gelost.

Das Verfahren zur Herstellung von schwefelhaltigem Stickstoffdünger umfasst die Umsetzung von Calciumnitrat-Lösung mit Schelfelsäure in Gegenwart von Ammoniak in dem beschriebenen Rohrreaktor sowie die anschließende Granulierung der entstehenden gipshaltigen Suspension.

Auf diese Weise können auch teigige Suspensionen mit geringen Wassergehalten mit anderen Komponenten angemaischt und in herkömmlichen Granulierungsapparaturen verarbeitet werden. Das Verfahren ist vor allem deshalb einfach, weil es ohne die technisch aufwändige Abtrennung des beim Rohphosphataufschluss entstehenden Fällungsgipses auskommt.

Das Calciumnitrat kann in jeder beliebigen Form, beispielsweise als im Handel erhältliche wässrige Lösung, eingesetzt werden. Es ist auch möglich, durch Reaktion von CaCO₃ mit HNO₃ erhaltenes Calciumnitrat zu verwenden.

Besonders bevorzugt ist es jedoch, wenn das zum Einsatz kommende Calciumnitrat-Tetrahydrat bei der Komplexdüngerproduktion nach dem Nitrophosphatverfahren anfallendes Calciumnitrat-Tetrahydrat ist. Auf diese Weise kann das im Rohphosphat enthaltene Calcium für die Herstellung von vermehrt benötigtem schwefelhaltigem Stickstoffdünger genutzt werden.

Die Umsetzung erfolgt bevorzugt in Gegenwart von Ammoniak, welches üblicherweise gasförmig eingesetzt wird. Es ist aber auch möglich, flüssiges Ammoniak oder Ammoniakwasser zu verwenden.

Wird das Calciumnitrat mit Schwefelsäure und Ammoniak in einem Rohrreaktor umgesetzt, wird dort eine sehr gute Durchmischung errecht. Es findet eine Neutralisierungsreaktion statt, wobei durch die gebildete Neutralisationswärme die Umsetzung bei annähernder-Siedeternperatur stattfindet. Die hohe Temperatur bei der Umsetzung ist vorteilhaft, da auf diese Weise eine Suspension mit wasserfreiem Gipsanhydrit entsteht. Gipsanhydrit ist vor allem deshalb erwünscht, weil er sehr gute Granulierungseigenschaften aufweist. Es wird eine pumpbare, gipshaltige Suspension mit einem niedrigen Wassergehalt erhalten.

Das Verfahren im Rohrreaktor umfasst somit folgende Reaktionen:

Ca(NO₃)₂*4H₂O + H₂SO₄→ CaSO₄ ⁺ 2 HNO₃ + H₂O (g) (2)

2 HNO₃ + 2 NH₃ → 2 NH₄NO₃ (3)

H₂SO₄ + 2 NH₃ → (NH₄)₂SO₄ (4).

Die Reaktion (2) stellt die Hauptreaktion im Rohrreaktor dar und führt zur Bildung von bis zu 46% wasserfreiem Gips im Reaktionsprodukt. Das Wasser des Calciumnitrat-Tetrahydrats wird durch die Exothermie der Reaktion bei einer Temperatur verdampft, bei der entstehender Gips wasserfrei wird.

Die Herstellung von wasserfreiem Gips ist von großer Bedeutung, da nur dieser einen hohen Nährstoffgehalt des Düngerendproduktes garantiert. Deshalb ist es erforderlich, dass die gesamte oder annähernd die gesamte durch die Reaktanden eingebrachte Wassermenge durch die Exothermie der Reaktion verdampft wird. Das Reaktionsprodukt enthält bevorzugt 10 % oder weniger an Wasser. Ist mehr Wasser im Reaktionsprodukt, so reagiert das wasserfreie Gips-Anhydrit beim Abkühlen zum wasserhaltigen Gips-Halbhydrat oder Gips-Dihydrat und man erhält einen Gips mit zu hohem Wasseranteil, so dass die gewünschte Düngerformulierung nicht mehr erreichbar ist.

In Reaktion (3) wird die gesamte in Reaktion (2) gebildete Salpetersäure oder ein Teil davon zu Ammonnitrat umgesetzt. Auf diese Weise können bis zu 54 % Ammonnitrat im Reaktionsprodukt erreicht werden.

Es ist möglich den Ammonnitrat-Gehalt zu erhöhen, indem Ammonnitrat entweder in den Rohrreaktor eingeleitet wird oder separat der Granuliertrommel zugeführt wird oder indem Salpetersäure in den Rohrreaktor eingeleitet wird. Eine Erhöhung des Ammonnitrat-Gehalts im Rohrreaktor ist jedoch nicht zu empfehlen, da es sich um eine explosive Mischung handeln kann.

Die Reaktion (4) ist bevorzugt auf einen Gesamtanteil von 3 bis 5 Gew % beschränkt, da die Reaktion sehr stark exotherm ist und die Temperatur sich sonst lokal zu stark erhöht, was zu Korrosionsproblemen des Materials führt.

Es ist insbesondere von Vorteil, wenn eine Calciumnitrat-Lösung mit einem Gehalt an Calciumnitrat zwischen 55% bis 65%, insbesondere 60%, verwendet wird. Die Calciumnitrat-Lösung weist somit einen Wassergehalt zwischen 35 bis 45 %, bevorzugt 40% auf.

Dies ist besonders wichtig, da der Wassergehalt in der Reaktionsmischung von der Qualität des verwendeten Calciumnitrat-Tetrahydrates abhängig ist. Eine 55 %ige Calciumnitrat-lösung enthält relativ viel Wasser, was zwar zu einem ruhigen Reaktionsverlauf im Rohrreaktor führt. Jedoch ist der Wassergehalt so hoch, dass durch die Reaktionswärme evtl. nicht alles Wasser verdampft werden kann, wodurch der Nährstoffgehalt des Düngers zu gering ausfällt.

Die weniger Wasser enthaltende 65 %ige Calciumnitrat-Lösung führt zwar auf der anderen Seite zu einem optimalen Produkt, jedoch ist bedingt durch den geringen Wassergehalt die Viskosität hoch, was zu Problemen beim Reaktorbetrieb führen kann. Ein optimaler Kompromiss ist deshalb der Einsatz einer 60 %igen Calciumnitrat-Lösung.

Der Eintrag der Reaktanden in den Rohrreaktor erfolgt vorteilhafterweise in mehreren Schritten. In einem ersten Schritt a) werden die Reaktanden Calciumnitrat-Lösung und NH₃ in die Einleitzone des Rohrreaktors eingetragen und im Mischkopf gemischt. In einem zweiten Schritt b) erfolgt dann der Eintrag der Schwefelsäure in den Rohrreaktor in die Einleitzone, in die eine Mischstrecke oder nach der einen Mischtrecke, wobei sich in der darauf folgenden Mischstrecke eine gipshaltige Suspension ausbildet.

Der Eintrag von NH₃ in die Einleitzone erfolgt im ersten Schritt a) vorteilhafterweise parallel zur Achse des Rohrreaktors und der Eintrag von Calciumnitrat-Tetrahydrat in einem Winkel von 90°. Es ist aber auch möglich, dass der Eintrag von Ammoniak in die Einleitzone im ersten Schritt a) in einem Winkel von kleiner 90° zur Achse des Rohrreaktors und der Eintrag von Calciumnitrat-Tetrahydrat parallel zur Achse des Rohrreaktors erfolgt.

Das Verfahren ist vorteilhafterweise dadurch gekennzeichnet, dass in einem dritten Schritt c) weiteres Ammoniak nach der mindestens einen Mischstrecke in den Rohrreaktor eingetragen wird, also eine zweiteilige Zugabe von Ammoniak erfolgt. Dabei werden bevorzugt im ersten Schritt a) mindestens 2/3 des gesamten Ammoniak-Bedarfes, und im dritten Schritt c) mindestens 1/3 des gesamten Ammoniak-Bedarfes eingetragen. Eine weitere Ammoniak-Zugabe ist in der Granuliertrommel möglich, um den pH-Wert auf größer 4,5 einzustellen.

Mit Vorteil wird die Calciumnitrat-Lösung in Form einer Schmelze in die Einleitzone eingetragen und in der Einleitzone mittels eines Statikmischers, insbesondere eines Intensivmischers, mit dem Ammoniak vermischt. Hierdurch wird das Ammoniak in der Calciumnitrat-Lösung homogen, in Form von feinen Blasen dispergiert.

Innerhalb der Mischstrecke erfolgt die Vermischung mit der Schwefelsäure bevorzugt durch Mischelemente, insbesondere durch einen Wendelmischer. Wendelmischer sind für die zähe, wasserarme, gipshaltige Suspension besonders geeignet, da bei Verwendung dieses Mischertyps ein großer Rohrquerschnitt frei bleibt und somit die Gefahr von Ablagerungen an den Reaktorwänden minimiert wird.

Die Reaktionstemperaturen betragen im Rohrreaktor zwischen 120 bis 145°C; bevorzugt zwischen 130 bis 140°C. Der Reaktionsdruck im Rohrreaktor beträgt im Verfahrensablauf zwischen 2,5 bis 6 bar, bevorzugt 2,5 bis 3,5 bar. Der Reaktionsdruck entspricht somit dem Dampfdruck des im Rohrreaktor vorhandenen Wassers. Temperatur und Druck können durch Zugabe von Kondensat, insbesondere Wasser, in den Rohrreaktor beliebig variiert werden. So sinken z.B. bei Kondensatzugabe sowohl Temperatur als auch Druck.

Es ist auch von Vorteil, wenn nach der Mischstrecke und/oder zwischen Mischstrecke und Auslaufzone, Luft in den Rohrreaktor eingetragen wird. Der Lufteintrag ermöglicht eine gute Zerstäubung des Reaktionsproduktes auch bei kleinen Durchsätzen, welche für einen guten Verlauf der Granulation notwendig ist. Vorteilhaft ist es, wenn dem Calciumnitrat vor und/oder bei der Umsetzung und/oder vor der Granulation Ammoniumnitrat zugesetzt wird. Das Ammoniumnitrat kann dabei vorteilhafterweise als wässrige Ammoniumnitratlösung vor der Umsetzung des Calciumnitrates mit der Sulfatverbindung zugesetzt werden. Dabei wird es mit dem Calciumnitrat vermischt, bevor dieses mit dem Sulfat reagiert. Auf diese Weise wird eine bessere Löslichkeit des Calciumnitrates erreicht.

Weiter ist es möglich, wässrige Ammoniumnitratlösung direkt bei der Umsetzung des Calciumnitrates mit dem Sulfat oder auch vor der Granulation des Düngers zuzusetzen. Die Konzentration der zugesetzten Ammoniumnitratlösung liegt beispielsweise bei 64 Gew% oder auch bei 94 Gew%. Es ist auch möglich, das Ammoniumnitrat als Schmelze einzusetzen.

Werden ausschließlich stickstoffhaltige Komponenten zugesetzt, wird ein schwefelhaltiger Stickstoffeinzeldünger, beispielsweise vom Typ "Ammonnitrat mit Schwefel", "Ammonsulfatsalpeter" oder "Stickstoff Magnesia" erhalten.

Weiter ist es möglich, andere Komponenten als Stickstoff, wie beispielsweise Kalisalze, Phosphorsalze, Magnesiumsalze oder sonstige übliche Düngerzusätze zuzuführen. Auf diese Weise wird ein schwefelhaltiger Komplexdünger erhalten.

In einer besonders bevorzugten Ausführungsform erfolgt das erfindungsgemäße Verfahren kontinuierlich und ist in eine Anlage zur kontinuierlichen Produktion von Komplexdünger nach dem Nitrophosphatverfahren mit zwei Ammonisierungslinien integriert. Dabei kann die Nitrophosphatanlage auch eine Anlage sein, welche schwefelhaltigen Komplexdünger, beispielsweise durch Zugabe von Schwefelsäure bei der Ammonisierung der Nitrophosphorsäure, herstellt. Üblicherweise ist an die Nitrophosphatanlage eine Anlage zur Gewinnung von Kalkammonsalpeter aus dem Calciumnitrat-Tetrahydrat gekoppelt.

Auf diese Weise ist es möglich, in einem einfachen Verfahren als Kuppelprodukt des Komplexdüngers schwefelhaltigen Stickstoffdünger herzustellen. Der Vorteil liegt darin, dass nicht wie in herkömmlichen Verfahren die technisch äußerst schwierige Abtrennung von Fällungsgips notwendig ist. Da die Gipsfällung erfindungsgemäß erst nach dem Phosphataufschluss erfolgt, ist keine Abtrennung notwendig und die entstehende gipshaltige Suspension kann aufgrund ihrer leichten Pumpbarkeit und Sprühfähigkeit, eventuell nach Zumischen weiterer Komponenten, direkt zu Düngergranulat weiterverarbeitet werden.

Besonders vorteilhaft ist eine Ausführungsform, bei welcher an die Nitrophosphatanlage eine Anlage zur Gewinnung von Kalkammonsalpeter aus dem Calciumnitrat-Tetrahydrat gekoppelt ist und der schwefelhaltige Stickstoffdünger in der Kalkammonsalpeteranlage durch Umsetzung von Calciumnitrat-Tetrahydrat mit Schwefelsäure in dem Verwendeten Rohrreaktor hergestellt wird.

Die Kalkammonsalpeteranlage weist üblicherweise eine Granulierungseinheit auf, welche zur Granulierung der gipshaltigen Suspension genutzt werden kann. Auf diese Weise ist es möglich, durch Installieren nur eines Rohrreaktors in einer bestehenden Nitrophosphatanlage oder Kalkammonsalpeteranlage ohne kosten- und zeitintensive Umrüstungsarbeiten aus dem gefällten Calciumnitrat wahlweise Kalkammonsalpeter oder schwefelhaltigen Stickstoffdünger zu produzieren.

In einer weiteren bevorzugten Ausführungsform wird der schwefelhaltige Stickstoffdünger in einer Nitrophosphatanlage mit zwei Ammonisierungslinien, welche mindestens einen Rohrreaktor zur Neutralisierung der Nitrophosphorsäure aufweist, durch Umsetzung von Calciumnitrat-Tetrahydrat mit Schwefelsäure im Rohrreaktor hergestellt. Mit Vorteil sind dabei mehrere erfindungsgemäße Rohrreaktoren, jedoch mindestens zwei, parallel zueinander angeordnet.

Diese Ausführungsform ist beispielsweise in einer Nitrophosphatanlage mit zwei ODDA-Linien, zwei Ammonisierungs- und zwei Granulierungslinien durchführbar. Während eine Linie in herkömmlicher Weise zur Herstellung von Komplexdünger verwendet wird, befindet sich die zweite Ammonisierung außer Betrieb, und die zweite Granulierung und der Rohrreaktor werden für die Herstellung des Schwefeldüngers genutzt. Es ist auch möglich, das erfindungsgemäße Verfahren in Nitrophosphatanlagen, die mehr als zwei Ammonisierungs- und Granulierungslinien aufweisen, durchzuführen. Üblicherweise ist an die Nitrophosphatanlage eine Anlage zur Gewinnung von Kalkammonsalpeter gekoppelt, so dass auf diese Weise gleichzeitig sowohl Kalkammonsalpeter als auch schwefelhaltiger Stickstoffdünger als Kuppelprodukt des Komplexdüngers produziert werden kann. Die hohe Flexibilität eines solchen Prozesses macht es möglich, innerhalb kürzester Zeit die Düngerproduktion der jeweiligen Marksituation anzupassen.

Die Erfindung wird nachfolgend unter Bezugnahme auf die Figuren an mehreren Ausführungsbeispielen näher erläutert. Es zeigen:
- Figur 1: eine schematische Darstellung einer ersten Ausführungsform des erfindungsgemäßen Rohrreaktors
- Figur 2: eine schematische Darstellung einer zweiten Ausführungsform des erfindungsgemäßen Rohrreaktors
- Figur 3: eine schematische Darstellung einer dritten Ausführungsform des erfindungsgemäßen Rohrreaktors
- Figur 4A: eine schematische Darstellung einer Zweistoffdüse
- Figur 4B: eine schematische Darstellung einer Granuliertrommel
- Figur 5A: eine schematische Darstellung einer ersten Ausführungsform des Kaskadenmischkopfes
- Figur 5B: eine schematische Darstellung einer zweiten Ausführungsform des Kaskadenmischkopfes
- Figur 6: eine schematische Darstellung einer ersten Ausführungsform der erfindungsgemäßen Vorrichtung
- Figur 7: eine schematische Darstellung einer ersten Ausführungsform der erfindungsgemäßen Vorrichtung

### Ausführungsbeispiel 1

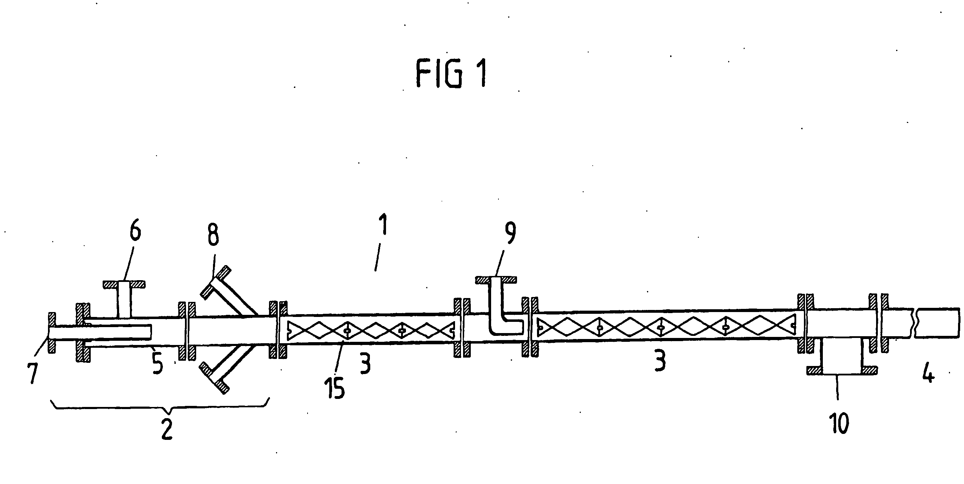

Figur 1 zeigt den schematischen, modularen Aufbau einer ersten Ausführungsform des Verwendeten Rohrreaktors 1. Der Reaktor 1 umfasst die Einleitzone 2, die erste und die zweite Mischstrecke 3 und die Auslaufzone 4. In die Mischtrecke 3 sind jeweils drei Wendelmischer 15 mit abwechselnder Drehrichtung eingebaut.

In der Einleitzone 2 sind der Mischkopf 5, das Einleitrohr für Calciumnitrat-Tetrahydrat 6 als Mittel zum Einbringen des ersten Reaktanden in die Einleitzone 2 und das erste Einleitrohr für Ammoniak 7 als Mittel zum Einbringen des zweiten Reaktanden in die Einleitzone 2 angeordnet.

Ebenso ist das ist das Einleitrohr für Schwefelsäure 8 als einem Mittel zum Einbringen eines Reaktanden in den Rohrreaktor in der Einleitzone nach dem Mischkopf 5 angeordnet, wobei das Mittel 8 zweiteilig ausgeführt ist.

Das zweite Einleitrohr für Ammoniak 9 als ein weiteres Mittel zum Einbringen eines Reaktanden in den Rohrreaktor ist zwischen den zwei Mischstrecken 3 angeordnet.

Des Weiteren befindet sich zwischen der Mischstrecke 3 und vor der Auslaufzone 4 ein T-Stück 10 zur Probeentnahme mit einem Hahn kombiniert mit einem Thermoelement.

Mit dieser Anordnung wurden 6,9 Teile Calciumnitrat-Tetrahydrat-Lösung mit einer Konzentration von 59 % Calciumnitrat mit 1 Teil Ammoniak und 3 Teilen konzentrierter Schwefelsäure umgesetzt. Es wurde ein Reaktionsprodukt der Zusammensetzung 45% Calciumsulfat, 47% Ammonnitrat, 3% Ammonsulfat und 5% Wasser erhalten:

### Ausführungsbeispiel 2

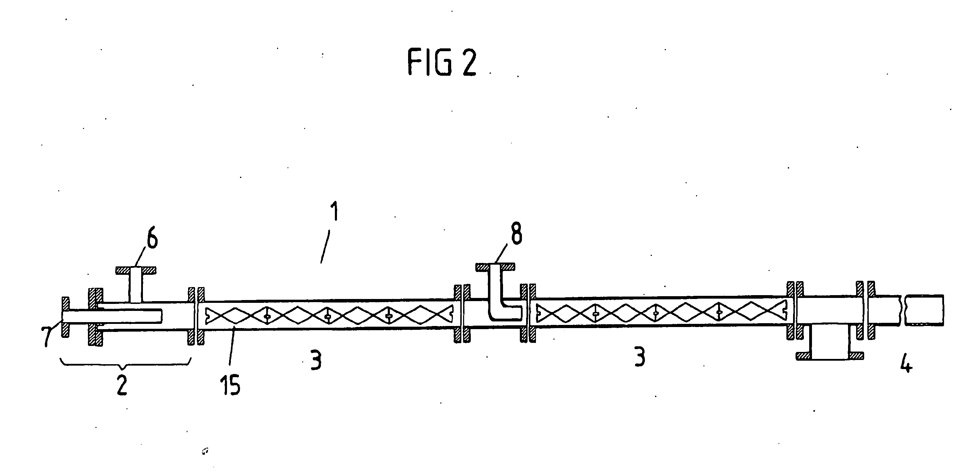

In einer weiteren Ausführungsform des verwendeten Rohrreaktors ist das Einleitrohr für Schwefelsäure 8 zwischen den beiden Mischstrecken 3 lokalisiert. Das Einleitrohr 8 weist hier eine gebogene Form auf. Die Austrittsöffnung des Einleitrohres befindet sich in der Mitte des Rohrreaktorquerschnittes (Figur 2). In die Mischstrecke 3 sind ebenfalls Wendelmischer 15 eingebaut.

Ammoniak wird wieder am Kopf über das Einleitrohr 7 und die Calciumnitrat-Lösung über das Einleitrohr 6 zudosiert. Ammoniak und Calciumnitrat werden zunächst in der ersten Mischstrecke 3 durchmischt, dann wird Schwefelsäure mittels eines gebogenen Einleitrohres 8 zudosiert. Durch diese Anordnung wird die exotherme Reaktion von Schwefelsäure mit Ammoniak zurückgedrängt.

Mit dieser Anordnung konnte das gleiche Reaktionsprodukt wie im Ausführungsbeispiel 1 hergestellt werden. Der Durchsatz an Reaktanden konnte jedoch deutlich erhöht werden. In einer Versuchsanlage mit einem Reaktordurchmesser von 35 mm und einer Reaktorlänge von 1,3m wurden bis zu 2 t/h Reaktionsprodukt hergestellt. Die Temperatur im Reaktor betrug zwischen 125 und 130°C, der Druckverlust ca. 3 bar. Am Reaktorende trennen sich Gas- und Flüssigkeitsphase, wodurch eine Zerstäubung des Reaktionsprodukts erreicht wird.

### Ausführungsbeispiel 3

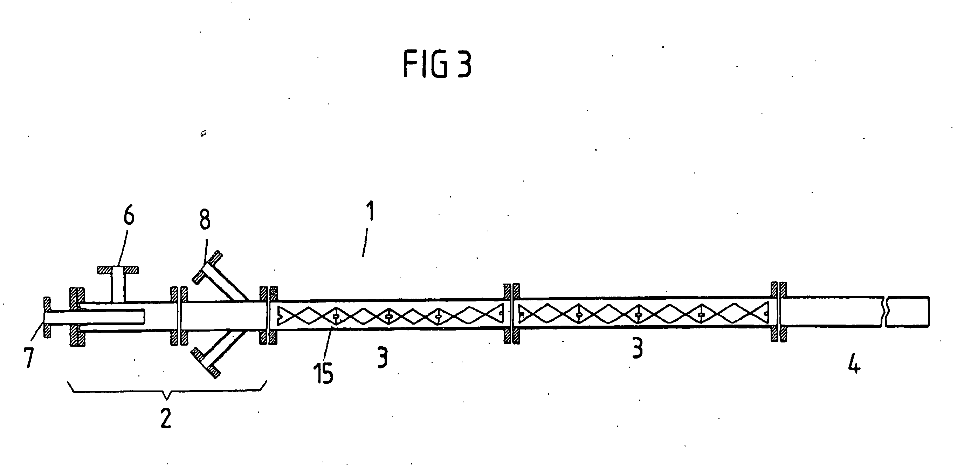

Eine dritte Ausführungsform (Figur 3) weist lediglich eine Mischstrecke 3 auf. In der Einleitzone 2 sind der Mischkopf 5, das Einleitrohr für die Calciumnitrat-Lösung 6 als Mittel zum Einbringen des ersten Reaktanden in die Einleitzone und das erste Einleitrohr für Ammoniak 7 als Mittel zum Einbringen des zweiten Reaktanden in die Einleitzone angeordnet. Auch hier ist das Einleitrohr für Schwefelsäure 8 als einem Mittel zum Einbringen eines Reaktanden in den Rohrreaktor in der Einleitzone nach dem Mischkopf 5 radial angeordnet, wobei das Mittel 8 zweiteilig ausgeführt ist.

Ammoniak wird auch hier frontal über das Einleitrohr 7 in den Reaktor eingeleitet. Die Einleitung von Calciumnitrat-Tetrahydrat erfolgt über das Einleitrohr 6.90° versetzt zur Einleitung des Ammoniaks. Nach dem Mischkopf 5 folgt die Schwefelsäure-Zuleitung über das Einleitrohr 8. In der Mischstrecke 3 erfolgt die Vermischung der Reaktanden, wobei auch hier die Mischstrecke 3 mit Statikmischerelementen ausgerüstet ist. Ein gerades Rohr als Auslaufzone 4 bildet den Reaktorauslauf.

Mit dieser Anordnung konnte ebenso wie in den Ausführungsbeispielen 1 und 2 das gewünschte Reaktionsprodukt hergestellt werden. Durch die zusätzliche Montage eines Einleitstücks für Luft 11 wurde auch bei geringem Durchsatz eine optimale Zerstäubung des Reaktionsprodukts am Reaktorauslauf erreicht.

### Ausführungsbeispiele 4 und 5

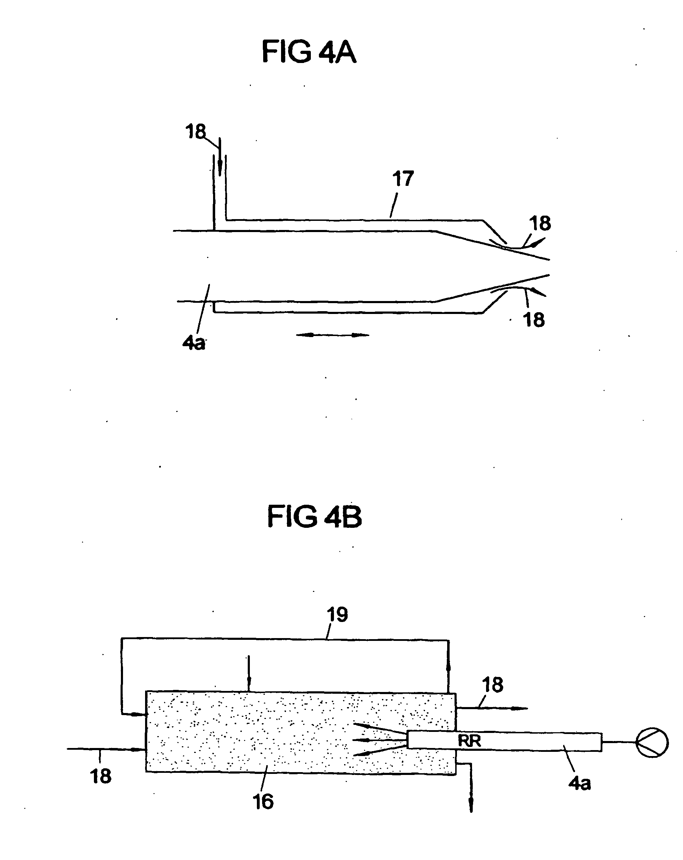

In einer vierten Ausführungsform ist die Auslaufzone 4 in Form einer Zweistoffdüse ausgebildet (Figur 4A). Die Düse ist in Form von zwei konzentrischen Rohren ausgebildet, wobei die Auslaufzone 4 in Form eines konisch verjüngten Innenrohres 4a ausgebildet ist. Das äußere Rohr 17 der Zweistoffdüse ist über eine Ringleitung mit Anschlussstutzen für Druckluft am Innenrohr 4a längsverstellbar angeordnet, wobei das äußere Rohr 17 das Innenrohr in der Länge überragt. Ein steilerer Verjüngungswinkel des äußeren Rohres 17 zum Innenrohr 4a lässt eine variable Verteilung von Druckluft am Mundstück des Innenrohres zu, wodurch das Produkt beim dadurch erfolgenden Dispergieren über die so ausgebildete Zweistoffdüse in unterschiedlicher Feinheit in die Granuliertrommel 16 eingebracht wird.

Die Zweistoffdüse am Reaktorausgang vermindert einerseits Druckschwankungen, und unterbindet andererseits das Freiwerden von Wasserdampf im Reaktor. Dadurch wird der Druck im Reaktor stabilisiert, da der Druck im Reaktor vorwiegend vom Dampfdruck des Wassers bei der durch die Reaktionswärme erreichten Produkttemperatur bestimmt wird.

Bei Verwendung einer Zweistoffdüse weist das erhaltene Produkt eine Zusammensetzung von bis zu 45 bis 50 Gew% Ammoniumnitrat, bis zu 46 Gew% Calciumsulfat, bis zu 5 Gew% Ammoniumsulfat und bis zu ca.5 Gew% Wasser auf.

In einer weiteren fünften Ausführungsform ist der Rohrreaktor 1 am hinteren Ende einer im Gleichstrom betriebenen Granuliertrommel 16 angeordnet (Figur 4B).

Das fertige Produkt wird aus der Auslaufzone 4 direkt in eine von mit Luft durchströmte Granuliertrommel 16 eingesprüht. Diese Anordnung erlaubt es, dass der am Reaktorauslauf freiwerdende Wasserdampf sofort mit der Abluft aus der Granuliertrommel abgesaugt wird und ein längerer Produktkontakt vermieden wird.

Das sich in der Granuliertrommel 16 verfestigte Produkt wird als Fertigprodukt am Boden der Granuliertrommel abgezogen. Kleinere Produktteilchen werden am Kopf der Granuliertrommel 16 abgezogen und über einen Kreislauf der Granuliertrommel 16 wieder zugeführt.

### Ausführungbeispiele 6 und 7

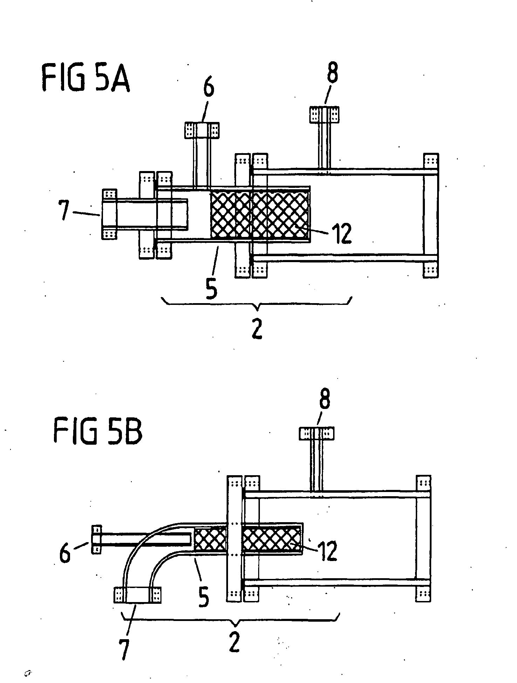

Die sechste und siebente Ausführungsform gemäß der Figuren 5A und 5B betreffen Ausgestaltungen der Statikmischerelemente 12 und des Mischkopfes 5.

Bei beiden Ausführungsformen werden die Ströme des Ammoniak 7 und der Calciumnitrat-Lösung 6 in einen Kaskadenmischkopf 5 eingeleitet, dem direkt ein Intensivmischer 12 angeschlossen ist. Durch die Verwendung eines KaskadenMischkopfes und der Anordnung eines Intensivmischers bereits im Mischkopf 5 ist eine Verkürzung der Gesamtmischanlage möglich, da der Intensivmischer 12 eine der Mischstrecken 3 ersetzt.

Auf die Einleitzone folgt nun lediglich eine Mischstrecke 3, welche wie bei den Ausführungsbeispielen 1 bis 3 mit Wendelmischerelementen ausgerüstet ist.

### Ausführungsbeispiele 8 und 9

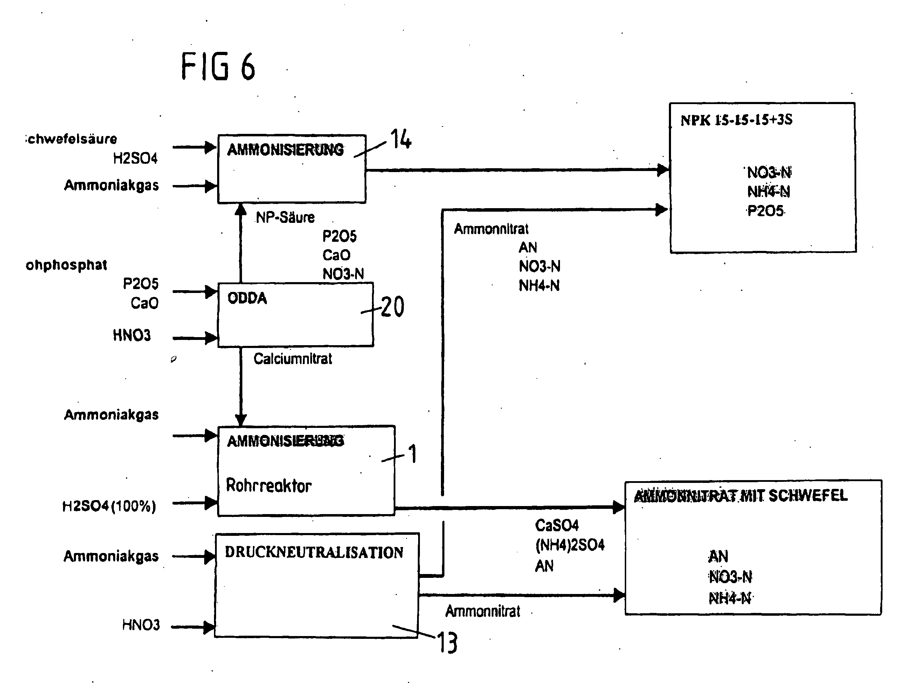

Figur 6 zeigt das Blockschema eines Nitrophosphatprozesses, bei welchem Komplexdünger des Typs NPK15-15-15 + 3S hergestellt und aus dem Calciumnitrat in einer Kalkammonsalpeteranlage schwefelhaltiger Stickstoffeinzeldünger des Typs "Ammonnitrat mit Schwefel" gewonnen wird. Hierbei handelt es sich um eine Ausführungsform des erfindungsgemäßen Verfahrens.

Während die Nitrophosphorsäure nach dem Rohphosphataufschluss in herkömmlicher Weise zu Komplexdünger aufgearbeitet wird, wird das beim Rohphosphataufschluss erhaltene. Calciumnitrat-Tetrahydrat in einer um einen Rohrreaktor 1 als Mischapparatur (Ammonisierungsapparatur) erweiterten Kalkammonsalpeteranlage mit konzentrierter Schwefelsäure unter Ammoniakzufuhr umgesetzt. Die erhaltene gipshaltige Suspension wird abgepumpt, mit Ammoniumnitrat aus der Druckneutralisation 13 (d.h. dem Reaktor) vermischt und zum Schwefeldünger "Ammonnitrat mit Schwefel" granuliert.

In einer ODDA-Anlage 20 wird das Rohphosphat mit Salpetersäure aufgeschlossen, wobei festes Calciumnitrat-Tetrahydrat erhalten wird. Dieses wird von der Nitrophosphorsäure abfiltriert, welche in einer Ammonisierungsapparatur 14 mit Schwefelsäure umgesetzt und mit Ammoniakgas neutralisiert wird. Die erhaltene Suspension wird mit Ammoniumnitrat vermischt und nach Granulation daraus der Komplexdünger (NPK 15-15-15+3S) erhalten.

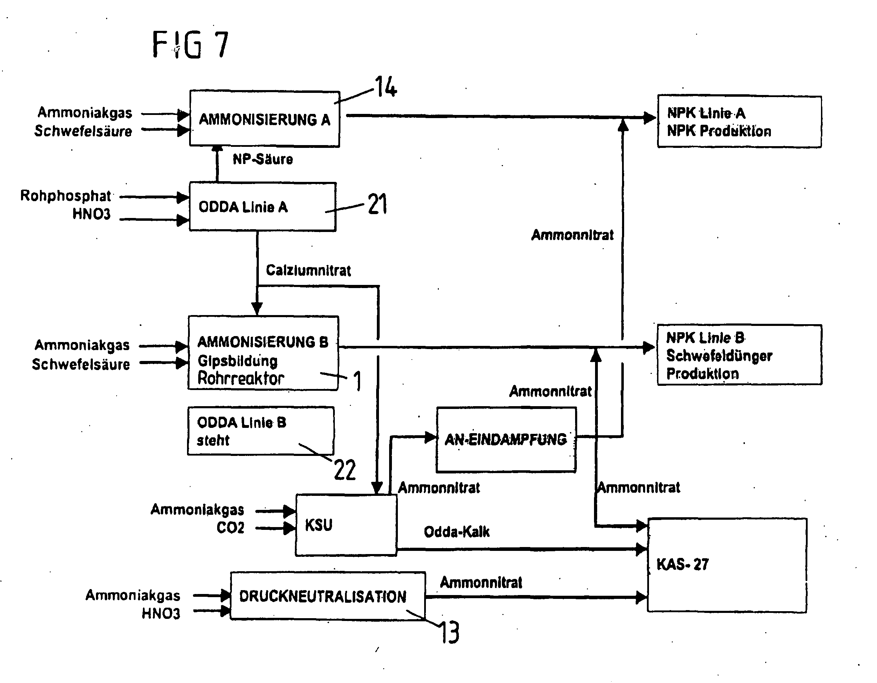

Figur 7 zeigt das Blockschema eines Nitrophosphatprozesses, bei welchem Komplexdünger, schwefelfreier Kalkammonsalpeter und schwefelhaltiger Stickstoffeinzeldünger hergestellt wird. Dies ist eine weitere Ausführungsform der vorliegenden Erfindung.

In einer Nitrophosphatanlage mit zwei ODDA-Linien 21, 22, zwei Ammonisierungslinien 1, 14 und zwei Granulierungslinien wird in einer der Linien in herkömmlicher Weise Komplexdünger des Typs NPK erzeugt, während die zweite Ammonisierungslinie einen Rohrreaktor 1 aufweist.

In diesem Rohrreaktor 1 der zweiten Linie wird aus einem Teil des beim Rohphosphataufschluss entstehenden Calciumnitrates mit Hilfe von Schwefelsäure und Ammoniakgas und unter Zufuhr von Ammoniumnitrat Schwefeldünger produziert.

Ein zweiter Teil des Calciumnitrates wird in der Kalksalpeterumwandlung und mit Ammoniumnitrat aus der Druckneutralisation 13 in herkömmlicher Weise zu schwefelfreiem Kalkammonsalpeter (KAS) verarbeitet.

### Bezugszeichenliste

- 1: Rohrreaktor
- 2: Einleitzone
- 3: Mischstrecke
- 4: Auslaufzone
- 5: Mischkopf
- 6: Einleitrohr für Calciumnitrat-Tetrahydrat
- 7: erstes Einleitrohr für Ammoniak
- 8: Einleitrohr für Schwefelsäure
- 9: zweites Einleitrohr für Ammoniak
- 10: T-Stück zur Probeentnahme
- 11: Einleitstück für Luft
- 12: Statikmischer

- 13: Druckneutralisation
- 14: Ammonisierung

- 15: Wendelmischerelement
- 16: Granuliertrommel
- 17: äußeres Rohr der Zweistoffdüse

- 20: ODDA-Anlage
- 21: ODDA-Linie A
- 22: ODDA-Linie B

## Patentansprüche

1. Verfahren zur Herstellung von schwefelhaltigem Stickstoffdünger in einem Rohrreaktor (1) mit mindestens einer Einleitzone (2), wobei die mindestens eine Einleitzone (2) mindestens einen Mischkopf (5) aufweist, und mindestens einer Mischstrecke (3), wobei der Rohrreaktor (1) mindestens ein erstes Mittel (6) zum Einbringen eines ersten Reaktanden und mindestens ein zweites Mittel: (7) zum Einbringen eines zweiten Reaktanden aufweist, die in der mindestens einen Einleitzone (2) angeordnet sind, und mindestens ein drittes Mittel (8, 9) zum Einbringen von mindestens einem dritten Reaktanden aufweist, wobei das dritte Mittel (8, 9) in der mindestens einen Einleitzone (2), in und / oder nach der mindestens einen Mischstrecke (3) angeordnet ist, wobei Calciumnitrat-Lösung (6) als ein erster Reaktand in dem Rohrreaktor (1) in Gegenwart von Ammoniak (7) als einem zweiten Reaktanden mit Schwefelsäure (8) als einem dritten Reaktanden umgesetzt wird und durch Granulierung der entstehenden gipshaltigen Suspension der Dünger erhalten wird, bei welchem
- in einem ersten Schritt a) die Reaktanden Calciumnitrat-Lösung (6) und NH₃ (7) in die Einleitzone (2) des Rohrreaktors (1) eingetragen und im Mischkopf (5) gemischt werden, und
- in einem zweiten Schritt b) Schwefelsäure (8) in den Rohrreaktor (1) in die Einleitzone (2) vor einer Mischstrecke (3), in die Mischstrecke (3) oder nach der Mischstrecke (3) unter Ausbildung einer gipshaltigen Suspension eingetragen wird.

2. Verfahren nach Anspruch 1, **dadurch gekennzeichnet, dass** die Calciumnitrat-Lösung bei der Komplexdüngerproduktion nach dem Nitrophosphatverfahren anfällt. Geänderte Ansprüche R 71(4)

3. Verfahren nach Anspruch 1 oder 2, **dadurch gekennzeichnet, dass** die Calciumnitrat-Lösung einen Calciumnitratgehalt von 55 bis 65 %, insbesondere von 60% aufweist.

4. Verfahren nach einem der vorstehenden Ansprüche, **dadurch gekennzeichnet, dass** der Wassergehalt der Reaktionsmischung beim Austritt aus dem Rohrreaktor (1) unter 10% liegt.

5. Verfahren nach einem der vorhergehenden Ansprüche, **dadurch gekennzeichnet, dass** in einem dritten Schritt c) weiteres Ammoniak nach der mindestens einen Mischstrecke (3) in den Rohrreaktor (1) eingetragen wird.

6. Verfahren nach Anspruch 5, **dadurch gekennzeichnet, dass** im ersten Schritt a) mindestens 2/3 des gesamten Ammoniak-Bedarfes, und im dritten Schritt c) mindestens 1/3 des gesamten Ammoniak-Bedarfes eingetragen werden.

7. Verfahren nach einem der vorstehenden Ansprüche, **dadurch gekennzeichnet, dass** das Calciumnitrat als Schmelze in die Einleitzone (2) eingetragen wird.

8. Verfahren nach einem der vorstehenden Ansprüche, **dadurch gekennzeichnet, dass** sich im Rohrreaktor (1) eine Reaktionstemperatur zwischen 120 bis 145°C, bevorzugt zwischen 130 bis 140°C, einstellt.

9. Verfahren nach einem der vorstehenden Ansprüche, **dadurch gekennzeichnet, dass** der Reaktionsdruck im Rohrreaktor (1) zwischen 2,5 bis 6 bar, bevorzugt 2,5 bis 3,5 bar, beträgt.

10. Verfahren nach einem der vorstehenden Ansprüche, **dadurch gekennzeichnet, dass** vor und/oder bei der Umsetzung und/oder vor der Granulation Ammoniumnitrat zugesetzt wird.

11. Verfahren nach einem der vorstehenden Ansprüche, **dadurch gekennzeichnet, dass** das Verfahren kontinuierlich erfolgt Geänderte Ansprüche R 71(4)
und in eine Anlage zur kontinuierlichen Produktion von Komplexdünger nach dem Nitrophosphatverfahren integriert ist.

12. Verfahren nach einem der vorstehenden Ansprüche, **dadurch gekennzeichnet, dass** das mindestens erste Mittel (6) in der Einleitzone (2) dem Einbringen einer Calciumnitrat-Lösung dient, und dass das mindestens zweite Mittel (7) in der Einleitzone dem Einbringen von NH₃ dient.

13. Verfahren nach einem der vorstehenden Ansprüche, **dadurch gekennzeichnet, dass** das erste Mittel (6) zum Einbringen des ersten Reaktanden in die Einleitzone (2) ein Einleitrohr mit einem Durchmesser bis zu 40 mm umfasst.

14. Verfahren nach einem der vorstehenden Ansprüche, **dadurch gekennzeichnet, dass** das weitere Mittel (7) zum Einbringen des weiteren, zweiten Reaktanden in die Einleitzone (2) ein Einleitrohr, insbesondere ein gebogenes Einleitrohr, mit einem Durchmesser bis zu 150 mm umfasst.

15. Verfahren nach einem der vorstehenden Ansprüche, **dadurch gekennzeichnet, dass** die Mischstrecke (3) einen Durchmesser bis zu 300 mm, insbesondere zwischen 50 mm und 250 mm, aufweist.

16. Verfahren nach einem der vorstehenden Ansprüche, **dadurch gekennzeichnet, dass** die Gesamtlänge der Mischstrecke (3) bis zu 5400 mm, insbesondere weniger als 4000 mm, beträgt.

17. Verfahren nach einem der vorstehenden Ansprüche, **dadurch gekennzeichnet, dass** die mindestens eine Mischstrecke (3) zwischen mindestens einer Einleitzone (2) und mindestens einer Auslaufzone (4) angeordnet ist, und die Auslaufzone (4) in eine Granuliertrommel (16) ragt.
Geänderte Ansprüche R 71(4)

18. Verfahren nach einem der vorstehenden Ansprüche, **dadurch gekennzeichnet, dass** die mindestens eine Mischstrecke (3) zwischen mindestens einer Einleitzone (2) und mindestens einer Auslaufzone (4) angeordnet ist, und die Auslaufzone (4) mindestens eine Düse, mindestens eine Verengung und/oder mindestens eine konische Verjüngung aufweist.

## Claims

1. Process for producing sulphurous nitrogen fertilizer in a tubular reactor (1) with at least one inlet zone (2), whereby the at least one inlet zone (2) comprises at least one mixing head (5), and at least one mixing section (3), whereby the tubular reactor (1) comprises at least one first means (6) for introducing a first reactant and at least one second means (7) for introducing a second reactant which means are arranged in the at least one inlet zone (2), and at least one third means (8, 9) for introducing at least one third reactant, whereby the third means (8, 9) is being arranged in the at least one inlet zone (2) in and/or downstream of the at least one mixing section (3), whereby calcium nitrate solution (6) as a first reactant is reacted in the tubular reactor (1) in the presence of ammonia (7) as a second reactant with sulphuric acid (8) as a third reactant and the fertilizer is obtained by granulation of the forming gypsum containing suspension, in which
- in a first step a) the reactant calcium nitrate solution (6) and ammonia (7) are introduced into the inlet zone (2) of the tubular reactor (1) and are mixed in the mixing head (5), and
- in a second step b) sulphuric acid (8) is introduced into the tubular reactor (1) into the inlet zone (2) before one mixing section (3), into the mixing section (3) or after the mixing section (3) under formation of the gypsum containing suspension.

2. Process according to claim 1, **characterized in that** the calcium nitrate solution is obtained during the complex fertilizer production according to the nitrophosphate process.

3. Process according to claim 1 or 2, **characterized in that** the calcium nitrate solution has a calcium nitrate content of 55 to 65%, in particular of 60%.

4. Process according to one of the preceding claims, **characterized in that** the water content of the reaction mixture is lower than 10% during discharge from the tubular reactor (1).

5. Process according to one of the preceding claims, **characterized in that** in a third step c) further ammonia is introduced into the tubular reactor (1) of the at least on mixing section (3).

6. Process according to claim 5, **characterized in that** in the first step a) at least two thirds of the complete ammonia demand, and in the third step c) at least one third of the complete ammonia demand are introduced.

7. Process according to one of the preceding claims, **characterized in that** the calcium nitrate is introduced into the inlet zone (2) as a melt.

8. Process according to one of the preceding claims, **characterized in that** a reaction temperature between 120 to 145°C, preferably between 130 to 140°C, is set in the tubular reactor (1).

9. Process according to one of the preceding claims; **characterized in that** the reaction pressure in the tubular reactor (1) is between 2.5 to 6 bar, preferably 2.5 to 3.5 bar.

10. Process according to one of the preceding claims, **characterized in that** ammonium nitrate is added before and/or during the reaction and/or before the granulation.

11. Process according to one of the preceding claims, **characterized in that**, the process is conducted continuously and is integrated into a plant for a continuous production of complex fertilizer according to the nitrophosphate process.

12. Process according to one of the preceding claims, **characterized in that** the at least first means (6) in the inlet zone (2) serves the introduction of a calcium nitrate solution, and the at least second means (7) in the inlet zone serves the introduction of ammonia.

13. Process according to one of the preceding claims, **characterized in that** the first means (6) for introducing a first reactant into the inlet zone (2) comprises an inlet tube with a diameter of up to 40 mm.

14. Process according to one of the preceding claims, **characterized in that that** the further means (7) for introducing a further, second reactant into the inlet zone (2) comprises an inlet tube, in particular a curved inlet tube, with a diameter up to 150 mm.

15. Process according to one of the preceding claims, **characterized in that** the mixing section (3) has a diameter of up to 300 mm, in particular between 50 mm and 250 mm.

16. Process according to one of the preceding claims, **characterized in that** the complete length of the mixing section (3) is up to 5400 mm, in particular less than 4000 mm.

17. Process according to one of the preceding claims, **characterized in that** the at least one mixing section (3) is arranged between at least one inlet zone (2) and at least one outlet zone (4), and the outlet zone (4) projects into a granulation drum (16).

18. Process according to one of the preceding claims **characterized in that** the at least one mixing section (3) is arranged between at least one inlet zone (2) and at least one outlet zone (4), and the outlet zone (4) has at least one nozzle, at least one contraction and/or at least one conical taper.

## Revendications

1. Procédé de fabrication d'un engrais azoté contenant du soufre dans un réacteur tubulaire (1) comportant au moins une zone d'admission (2), la au moins une zone d'admission (2) présentant au moins une tête de mélange (5), et au moins une section de mélange (3), le réacteur tubulaire (1) présentant au moins un premier moyen (6) pour introduire un premier réactif et au moins un deuxième moyen (7) pour introduire un deuxième réactif, qui sont disposés dans la moins une zone d'admission (2), et au moins un troisième moyen (8, 9) pour introduire au moins un troisième réactif, le troisième moyen (8, 9) étant disposé dans la au moins une zone d'admission (2) dans et/ou après la au moins une section de mélange (3), une solution de nitrate de calcium (6) en tant que premier réactif réagissant dans le réacteur tubulaire (1) en présence d'ammoniac (7) en tant que deuxième réactif avec de l'acide sulfurique (8) en tant que troisième réactif, et l'engrais étant obtenu par granulation de la suspension résultante contenant du plâtre, dans lequel
- dans une première étape a), les réactifs solution de nitrate de calcium (6) et NH₃ (7) sont introduits dans la zone d'admission (2) du réacteur tubulaire (1) et sont mélangés dans la tête de mélange (5), et
- dans une deuxième étape b), l'acide sulfurique (8) est introduit dans le réacteur tubulaire (1) dans la zone d'admission (2) avant la section de mélange (3), dans la section de mélange (3) ou après la section de mélange (3), ce qui provoque la formation d'une suspension contenant du plâtre.

2. Procédé selon la revendication 1, **caractérisé en ce que** la solution de nitrate de calcium est produite lors de la production d'engrais complexe selon le procédé au nitrophosphate.

3. Procédé selon la revendication 1 ou 2, **caractérisé en ce que** la solution de nitrate de calcium présente une teneur en nitrate de calcium de 55 à 65 %, en particulier de 60%.

4. Procédé selon l'une des revendications précédentes, **caractérisé en ce que** la teneur en eau du mélange réactionnel à la sortie du réacteur tubulaire (1) se situe en dessous de 10 %.

5. Procédé selon l'une des revendications précédentes, **caractérisé en ce que**, dans une troisième étape c), de l'ammoniac supplémentaire est introduit dans le réacteur tubulaire (1) après la au moins une section de mélange (3).

6. Procédé selon la revendication 5, **caractérisé en ce que**, dans la première étape a), les au moins 2/3 de la totalité des besoins en ammoniac, et dans la troisième étape c), le au moins 1/3 de la totalité des besoins en ammoniac sont introduits.

7. Procédé selon l'une des revendications précédentes, **caractérisé en ce que** le nitrate de calcium est introduit sous forme de matière fondue dans la zone d'admission (2).

8. Procédé selon l'une des revendications précédentes, **caractérisé en ce que**, dans le réacteur tubulaire (1), une température de réaction située entre 120 et 145°C, de préférence entre 130 et 140°C, est réglée.

9. Procédé selon l'une des revendications précédentes, **caractérisé en ce que** la pression de réaction dans le réacteur tubulaire (1) atteint 2,5 à 6 bars, de préférence 2,5 à 3,5 bars.

10. Procédé selon l'une des revendications précédentes, **caractérisé en ce que** du nitrate d'ammonium est ajouté avant et/ou pendant la réaction et/ou avant la granulation.

11. Procédé selon l'une des revendications précédentes, **caractérisé en ce que** le procédé s'effectue en continu et est intégré à une installation pour la production continue d'engrais complexes selon le procédé au nitrophosphate.

12. Procédé selon l'une des revendications précédentes, **caractérisé en ce que** le au moins un premier moyen (6) dans la zone d'admission (2) sert à introduire une solution de nitrate de calcium et **en ce que** le au moins un deuxième moyen (7) dans la zone d'admission sert à introduire le NH₃.

13. Procédé selon l'une des revendications précédentes, **caractérisé en ce que** le premier moyen (6) pour introduire le premier réactif dans la zone d'admission (2) comprend un tube d'admission ayant un diamètre allant jusqu'à 40 mm.

14. Procédé selon l'une des revendications précédentes, **caractérisé en ce que** l'autre moyen (7) pour introduire le du deuxième autre réactif dans la zone d'admission (2) comprend un tube d'admission, en particulier un tube d'admission coudé, ayant un diamètre allant jusqu'à 150 mm.

15. Procédé selon l'une des revendications précédentes, **caractérisé en ce que** la section de mélange (3) présente un diamètre allant jusqu'à 300 mm, en particulier entre 50 mm et 250 mm.

16. Procédé selon l'une des revendications précédentes, **caractérisé en ce que** la longueur totale de la section de mélange (3) va jusqu'à 5400 mm, en particulier est inférieure à 4000 mm.

17. Procédé selon l'une des revendications précédentes, **caractérisé en ce que** la au moins une section de mélange (3) est disposée entre au moins une zone d'admission (2) et au moins une zone d'évacuation (4), et la zone d'évacuation (4) débouche dans un tambour de granulation (16).

18. Procédé selon l'une des revendications précédentes, **caractérisé en ce que** la au moins une section de mélange (3) est disposée entre au moins une zone d'admission (2) et au moins une zone d'évacuation (4), et la zone d'évacuation (4) comprend au moins une buse, au moins un étranglement et/ou au moins un biseautage effilé conique.
